Europäisches Patentamt

European Patent Office

Office européen des brevets

(19)

(11) Veröffentlichungsnummer: **0 213 604**
**A2**

(12) # EUROPÄISCHE PATENTANMELDUNG

(21) Anmeldenummer: **86111864.4**

(22) Anmeldetag: **27.08.86**

(51) Int. Cl.⁴: **F 02 F 1/24**

(30) Priorität: **30.08.85 DE 3530997**

(43) Veröffentlichungstag der Anmeldung:
**11.03.87 Patentblatt 87/11**

(84) Benannte Vertragsstaaten:
**DE FR GB IT**

(71) Anmelder: **Plaksin, Eugen**
**Wiesenstrasse 18**
**D-6750 Kaiserslautern(DE)**

(72) Erfinder: **Plaksin, Eugen**
**Wiesenstrasse 18**
**D-6750 Kaiserslautern(DE)**

(74) Vertreter: **Klose, Hans, Dipl.-Phys. et al,**
**Kurfürstenstrasse 32**
**D-6700 Ludwigshafen(DE)**

(54) Zündvorrichtung für einen Verbrennungsmotor.

(57) Eine Zündvorrichtung für einen Verbrennungsmotor enthält zwischen dem Zylinderkopf (30) und dem Zylinderblock (32) eine plattenförmige Einlage, die eine Isolationsplatte (18) und eine Anzahl von Elektroden (6, 8) aufweist. Es soll eine Zündvorrichtung geschaffen werden, die bei einfacher Konstruktion eine bessere Verbrennung ermöglicht. Es wird vorgeschlagen, daß pro Zylinder wenigstens zwei Paare (2) mit je einer der ersten Elektroden (6) sowie einer der zweiten Elektroden (8) in unmittelbarer Nähe der Seitenwand (38) des Zylinders angeordnet sind. Die ersten Elektroden (6) der Elektrodenpaare sind parallel geschaltet und die Dichtungs- und Isolations- platte (18) ist auch als Dichtung zwischen dem Zylinderkopf (30) und dem Zylinderblock (32) ausgebildet.

EP 0 213 604 A2

Croydon Printing Company Ltd.

./...

Fig. 4

I

Anmelder:    Eugen Plaksin
Wiesenstr. 18
6750 Kaiserslautern

Zündvorrichtung für einen Verbrennungsmotor

Die Erfindung betrifft eine Zündvorrichtung für einen Verbrennungsmotor mit einer zwischen Zylinderblock und Zylinderkopf angeordneten plattenförmige Einlage, welche eine Isolationsplatte und für jeden Zylinder eine Anzahl von Elektroden aufweist, wobei erste Elektroden mit einem Zündverteiler einer Zündelektronik oder dergleichen verbunden und zweite Elektroden, insbesondere über den Zylinderblock, Bestandteil des Zündstromkreises sind.

Für Zündvorrichtungen ist es üblich, das Elektrodenpaar in einer Zündkerze vorzusehen, die über entsprechende Gewinde in den Zylinderkopf des Verbrennungsmotors eingeschraubt und bei Bedarf auch wieder gewechselt werden kann. Die Zündelektroden befinden sich im oberen Bereich des Verbrennungsraumes, so daß die beim Zünden des Gemisches entstehende Druckwelle im wesentlichen in axialer Richtung der Zylinderbohrung verläuft. Erfolgt durch fehlerhafte Einstellung des Zündzeitpunktes oder durch sonstige Veränderungen in der Zündvorrichtung eine Frühzündung, so kann die Druckwelle zu

erheblichen Überbeanspruchungen,

insbesondere der Lager, führen. Ferner erfolgt die Zündung nur an einem einzigen Punkt, und es kann in der Praxis nicht ausgeschlossen werden, daß in bestimmten Bereichen des Brennraumes nur eine unvollständige Verbrennung stattfindet. Es sei insbesondere auf die Tatsache verwiesen, daß die Flammenfront bei der Verbrennung mangels ausreichendem Sauerstoffniveau und zu niederer Temperatur vor den Wandungen des Brennraumes erlischt (sogen. "wall quenching") und somit Kohleablagerungen verursacht, die bei Belastung und hoher Verdichtung durch Nachglühen zur Fremdzündung führen (Klopfen). Die hierdurch bedingten unverbrannten Kohlenwasserstoffe und ggfs. auch Stickoxide usw. führen zu einer starken Umweltbelastung.

In der DE-A-32 30 462 ist eine Zündvorrichtung beschrieben, die eine zwischen dem Motorblock und dem Zylinderkopf angeordnete plattenförmige Einlage aufweist, wobei zusätzlich zum Zylinderblock und auch zum Zylinderkopf hin jeweils eine Dichtung vorgesehen ist. Die genannte Einlage enthält eine äußere Isolationsplatte, in die pro Zylinder je ein kreisförmiges Loch eingebracht ist, wobei in die genannten Löcher jeweils pro Zylinder eine ringförmige Metallplatte als Elektrodenhalterung eingesetzt ist. Diese Elektrodenhalterung bzw. Metallplatte enthält eine Anzahl von radialen Bohrungen, in die eine Anzahl von Elektroden mittels rohrförmigen Isolationselementen sowie Dichtungen eingesetzt sind. Ein nicht unerheblicher konstruktiver Aufwand ist insoweit erforderlich. Die genannten Elektroden sind in Reihe geschaltet, um mit einer Vielzahl von Zündstrecken die Verbrennungsgeschwindigkeit des Luft-Kraftstoff-Gemisches zu verbessern. Die genannte Elektrodenhalterung ragt zum Teil recht weit von der Zylinderwand weg in das Innere des Zylinders, um in der bisher üblichen Weise möglichst in der Zylindermitte die Zündung des Gemisches zu ermöglichen. Aufgrund der verwinkelten Brennraumgeometrie besteht die Gefahr einer unzureichenden Zündung und eines hohen Schadstoffanteiles des Abgases. Es die Gefahr von Kohleablagerungen und nachteiligen Fehlzündungen. Die Reihenschaltung von mehreren Zündstrecken erfordert einen nicht unerheblichen zusätzlichen Aufwand, und zwar entweder durch die Bereitstellung einer sehr hohen Zündspannung von der Zündelektronik oder

**Patentanwalt Dipl.-Phys. HANS KLOSE**
Zugelassener Vertreter vor dem Europäischen Patentamt   – 3 –

6700 Ludwigshafen
Kurfürstenstraße 32

3.

0213604

durch zusätzliche Kondensatoren.

Der Erfindung liegt die Aufgabe zugrunde, eine Zündvorrichtung zu schaffen, welche eine verbesserte Verbrennung gewährleistet und eine geringere Materialbeanspruchung sicherstellt. Die Zündvorrichtung soll einen geringen Fertigungsaufwand erfordern und gerade im Hinblick auf die Großserienfertigung von Kfz-Motoren eine kostengünstige Montage gewährleisten. Die Zündvorrichtung soll ohne wesentliche Änderungen bestehender Motorkonzepte realisiert werden können, und ferner sollen aber auch moderne Motorkonzepte aus Oxidkeramik oder vergleichbaren Werkstoffen zum Einsatz gelangen können. Die Zündvorrichtung soll einen geringen Platzbedarf erfordern und im übrigen hinsichtlich der Gestaltung des Verbrennungsraumes dem Konstrukteur neue Möglichkeiten eröffnen.

Zur Lösung dieser Aufgabe werden für eine Zündvorrichtung der gattungsgemäßen Art die im Kennzeichen des Patentanspruchs 1 angegebenen Merkmale vorgeschlagen.

Durch die erfindungsgemäße Ausgestaltung wird eine wesentlich verbesserte Verbrennung erzielt, wodurch nicht nur die Umweltbelastung durch den Motor reduziert wird, sondern auch eine verbesserte Nutzung des eingesetzten Kraftstoffes erzielt wird. Die Zündung des zündfähigen Gemisches erfolgt erfindungsgemäß an zwei oder mehreren örtlich getrennten Bereichen an der Seite des Brennraumes. Anstelle der zentralen, im wesentlichen in Richtung der Zylinderachse auf die Kolbenoberfläche wirkenden Druckwelle wird erfindungsgemäß eine im wesentlichen tangential oder mit einer wesentlichen tangentialen Komponente auf die Oberfläche des Zylinderkopfes wirkende Druckwelle erreicht. Es wird eine weichere Verbrennung bei geringerer Materialbeanspruchung erreicht. Die Auswirkungen des wall quenching werden reduziert, da die Verbrennung aufgrund der Anordnung der wenigstens zwei Elektrodenpaare unmittelbar an oder in der Zylinderwand dort das Gasgemisch weniger stark abkühlt und mithin auf einem höheren Temperaturniveau liegt als bei bisher bekannten Zündsystemen. Die Zündvorrichtung kann darüberhinaus im Rahmen der Erfindung auch unmittelbar in den Motor und insbesondere den Zylinderkopf integriert sein, sofern der Motor und / oder der Zylinderkopf aus einem Material gefertigt ist, das eine gute elekrische Isolation gewährleistet wie insbesondere Oxidkeramik oder ein vergleichbarer Werkstoff. Ferner kann die Zündvorrichtung als eine im Vergleich zur Gesamthöhe des Motors relativ schmale Platte erfindungsgemäß ausgebildet sein, die im Bereich des Brennraumes zwischen Zylinderkopf und Motorblock eingespannt wird. Schließlich kann die erfindungsgemäße Zündvorrichtung auch wie eine bisher übliche Zylinderkopfdichtung zur Abdichtung dienen. Die Zündvorrichtung ist insgesamt als eine flache Platte ausgebildet, die eine hinreichende Flexibilität aufweist, um eine einfache Handhabung beim Einbau und der Montage zu gewährleisten.

Aufgrund der erfindungsgemäß dünnen Ausbildung der Isolations- und Dichtungsplatte, in welche die Elektroden eingebettet sind, dienen die einander gegenüberliegenden und durch die genannte Platte voneinander isolierten Flächen vom Zylinderkopf und Motorblock als Kondensatorflächen. In optimaler Weise werden die sowieso vorhandenen Bauteile des Rotors unmittelbar genutzt, ohne daß zur Erzeugung von Kondensatoren die aus dem Stand der Technik vorbekannten aufwendigen Maßnahmen erforderlich sind. Die Isolationsplatte kann im Rahmen der Erfindung zweckmäßig aus einem Schichtwerkstoff aufgebaut sein, wobei in entsprechenden Aussparungen einer mittleren Schicht die Elektroden sowie deren Zuleitungen usw. angeordnet sind. Diese mittlere Schicht einschließlich Elektroden wird zum Motorblock und zum Zylinderkopf hin jeweils von einer weiteren dünnen Schicht, zweckmäßig aus dem gleichen Werkstoff wie die mittlere Schicht, eingebettet. Die gesamte dünne Isolationsplatte weist erfindungsgemäß eine Materialdicke von etwa 3 mm bis maximal 6 mm auf. Als zweckmäßig hat sich eine Gesamtdicke von 4 bis 5 mm erwiesen. Die Isolationsplatte besteht im Rahmen dieser Erfindung aus einem Material mit einem hohen Schmelzpunkt, und zwar im Bereich von 1600° Celsius und ggfs. auch darüber. Als bevorzugte Werkstoffe seien synthetischer Glimmer oder Keramik, und zwar insbesondere Oxidkeramik, genannt. Eine besonders einfache Herstellung ermöglicht sogenanntes Keramik-

Patentanwalt Dipl.-Phys. HANS KLOSE
Zugelassener Vertreter vor dem Europäischen Patentamt    - 5 -    : ... : 5.

0213604

6700 Ludwigshafen
Kurfürstenstraße 32

papier mit einer Schichtstärke von etwa 1 bis 1,6 mm, wobei die bereits erläuterten drei Schichten jeweils mit einem solchen Keramikpapier, das problemlos mit einer Schere oder einem geeigneten Schneidwerkzeug auf Form geschnitten werden kann, hergestellt sind. Die Elektroden können in den Aussparungen der mittleren Schicht zuverlässig fixiert und arretiert werden, ohne daß insoweit zusätzliche Maßnahmen erforderlich sind. Eine besondere Elektrodenhalterung kann entfallen oder erfindungsgemäß in die Isolationsplatte integriert sein. Der Innendurchmesser der Elektrodenhalterung ist erfindungsgemäß im wesentlichen gleich groß wie der Zylinderdurchmesser; entsprechendes gilt auch für die Ausführungsform mit integrierter Elektrodenhalterung bzw. ohne besondere Elektrodenhalterung für die Isolationsplatte. Wesentlich ist für alle Ausgestaltungen der Zündvorrichtung, daß die Elektrodenpaare unmittelbar an bzw. in der Seitenwand des Zylinders angeordnet sind, wobei wenigstens zwei Elektrodenpaare über den Umfang symmetrisch verteilt angeordnet sind. Die Zündung erfolgt an wenigstens zwei Punkten, praktisch unmittelbar an der Zylinderwand, wobei aufgrund der symmetrischen Anordnung der Elektrodenpaare auch eine gleichmäßige Kraftverteilung auf den Kolben erzielt und Kippmomente vermieden werden. Durch die symmetrische bzw. über den Umfang des Zylinders gleichmäßige Verteilung der Elektrodenpaare wird in Rahmen dieser Erfindung gewährleistet, daß die resultierende Kraftkomponente im wesentlichen in der Mitte des Zylinders in Richtung der Zylinderachse verläuft. Eine freie Geometrie des Brennraumes wird gewährleistet und Ablagerungen infolge von Verbrennungsrückständen werden zuverlässig vermieden.

In einer besonderen Ausgestaltung sind die Elektrodenpaare in einer bevorzugt ringförmigen Halterung angeordnet, die den Zylinderabschluß bildet. Diese Halterung besteht zweckmäßig aus Oxidkeramik (Al2 O3) oder einem vergleichbaren Werkstoff hoher Hitzebeständigkeit und / oder Temperaturschockbeständigkeit. Im Rahmen der Erfindung besteht die Halterung aus den auch für den Keramikkörper von Zündkerzen verwendeten Werkstoffen. Die Elektrodenhalterung dient zur Fixierung der Elektroden und Aufnahme der schwellenden Drücke zwischen Zylinderkopf und Motorblock. Die Halterung radial außen von der Isolationsplatte umgeben und in diese eingebettet, welche als Dichtung zwischen Zylinderblock und Zylinderkopf dient.

Anstelle der heute üblichen Zylinderkopfdichtung wird die erfindungsgemäße Zündvorrichtung zwischen dem Zylinderkopf und dem Zylinderblock angeordnet. Besondere Halterungen, Gewindebohrungen oder Sonstiges, die bisher bei Zündkerzen notwendig waren, entfallen somit. Die Zündvorrichtung wird mittels der gleichen Schrauben befestigt, die auch zur Verbindung von Zylinderkopf am Zylinderblock dienen. Die Isolationsplatte und im Rahmen der Erfindung ggfs. die Elektrodenhalterung weisen eine hohe Dielektrizität auf. Die Isolation der unter Hochspannung stehenden Elektroden bezüglich des Motorblocks ist damit sicher gewährleistet.

Die Erfindung wird anhand der in der Zeichnung dargestellten Ausführungsbeispiele näher erläutert. Es zeigen:

Fig. 1    eine schematische Darstellung des erfindungsgemäßen tangentialen Zündsystems,

Fig. 2    vergrößert einen Schnitt quer zur Zylinderachse durch die Elektroden,

Fig. 3    einen Schnitt entlang der Schnittlinie A durch den Gegenstand der Fig. 2 und

Fig. 4    einen axialen Schnitt durch den Kolben und den Zylinder eines Otto-Motors.

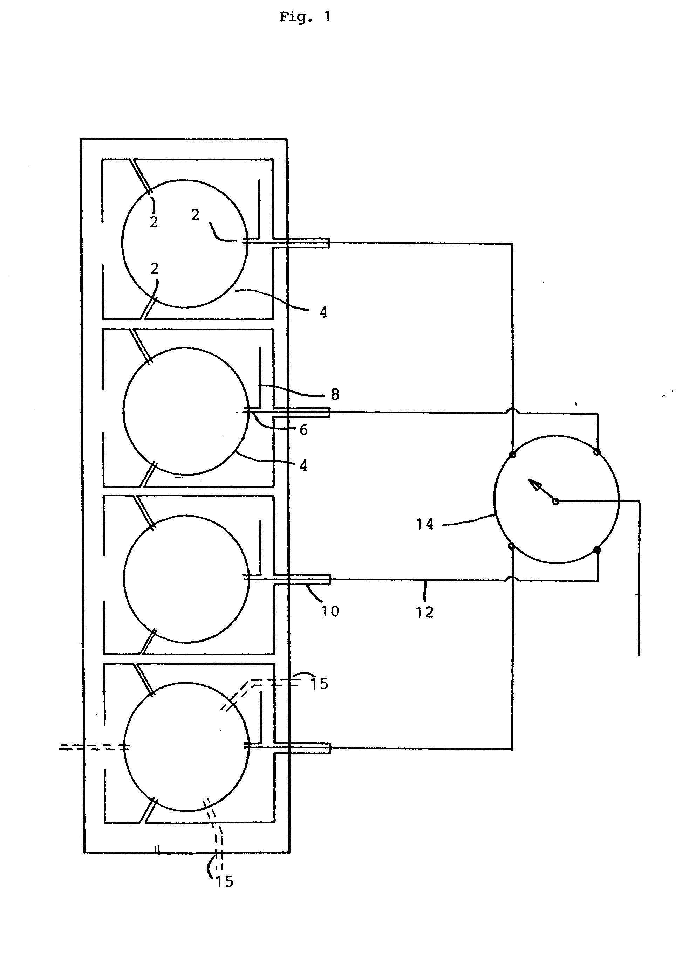

In Fig. 1 ist schematisch das erfindungsgemäß vorgeschlagene tangentiale Zündsystem mit jeweils drei Elektrodenpaaren 2 pro Zylinder 4 dargestellt. Die Elektrodenpaare 2 sind jeweils über den Zylinderumfang gleichmäßig verteilt angeordnet. Das Elektrodenpaar 2 enthält eine erste Elektrode 6 und eine zweite Elektrode 8. Pro Zylinder 4 sind die ersten Elektroden 6 gemeinsam aus der Zündvorrichtung auf einen Stecker 10 ge-

Patentanwalt Dipl.-Phys. HANS KLOSE
Zugelassener Vertreter vor dem Europäischen Patentamt     - 7 -          7

0213604
6700 Ludwigshafen
irfürstenstraße 32

führt, von welchem in bekannter Weise über eine elektrische Leitung 12 die Verbindung zu einem Zündverteiler 14 hergestellt wird. Die Verbrennung des Zündgemisches erfolgt somit von mehreren Stellen im Brennraum gleichzeitig ausgehend, und zwar entsprechend der Anzahl der Elektrodenpaare 2 pro Zylinder 4. Die Verbrennung des zündfähigen Gemisches kann erfindungsgemäß nicht unwesentlich schneller erfolgen als bisher. Der Abbrand der Elektrodenpaare wird erheblich reduziert, und die Lebensdauer der Zündanordnung wird insgesamt beträchtlich erhöht. Im Rahmen der Erfindung ist es darüberhinaus von besonderer Bedeutung, daß die Elektrodenpaare 2 pro Zylinder sich selbständig auf den gleichen Elektrodenabstand einstellen. Hat beispielsweise eine Elektrode infolge von Fertigungstoleranzen zunächst einen zu geringen Abstand, so wird im Vergleich mit den anderen Elektrodenpaaren dieses erste Elektrodenpaar stärker abbrennen, bis praktisch der gleiche Abstand wie bei den anderen Elektrodenpaaren erreicht wird. Erfindungswesentlich sind nämlich die Elektrodenpaare parallel geschaltet. Ferner können darüberhinaus im Rahmen der Erfindung auch weitere Elektroden vorhanden sein, die in Fig. 1 durch die strichpunktierten Linien 15 dargestellt sind. Derartige zusätzliche Elektrodenpaare können erfindungsgemäß zum Ersatz vorgesehen sein, um dann mit dem Zündverteiler 14 verbunden zu werden, wenn die Elektrodenpaare 2 infolge Abbrandes einen zu hohen Abstand aufweisen. Der Austausch der Zündvorrichtung muß somit erst nach entsprechend verlängerter Zeit durchgeführt werden. Sind in der besagten erfindungsgemäßen Weise mehrere Elektrodenpaare vorgesehen, die jeweils wahlweise in Gruppen zugeschaltet werden, so werden die Leitungen nach außen zweckmäßig separat geführt, und die Verschaltung erfolgt außerhalb der Zündvorrichtung. Durch die Darstellung ist keine Beschränkung der Erfindung auf eine solche Anzahl Elektrodenpaare erfolgt, obgleich drei Elektrodenpaare einen besonders günstigen Kompromiß darstellen. Andererseits kann bei Bedarf im Rahmen der Erfindung auch die Anzahl der Elektrodenpaare, insbesondere im Hinblick auf eine längere Lebensdauer der gesamten Anordnung, erhöht werden.

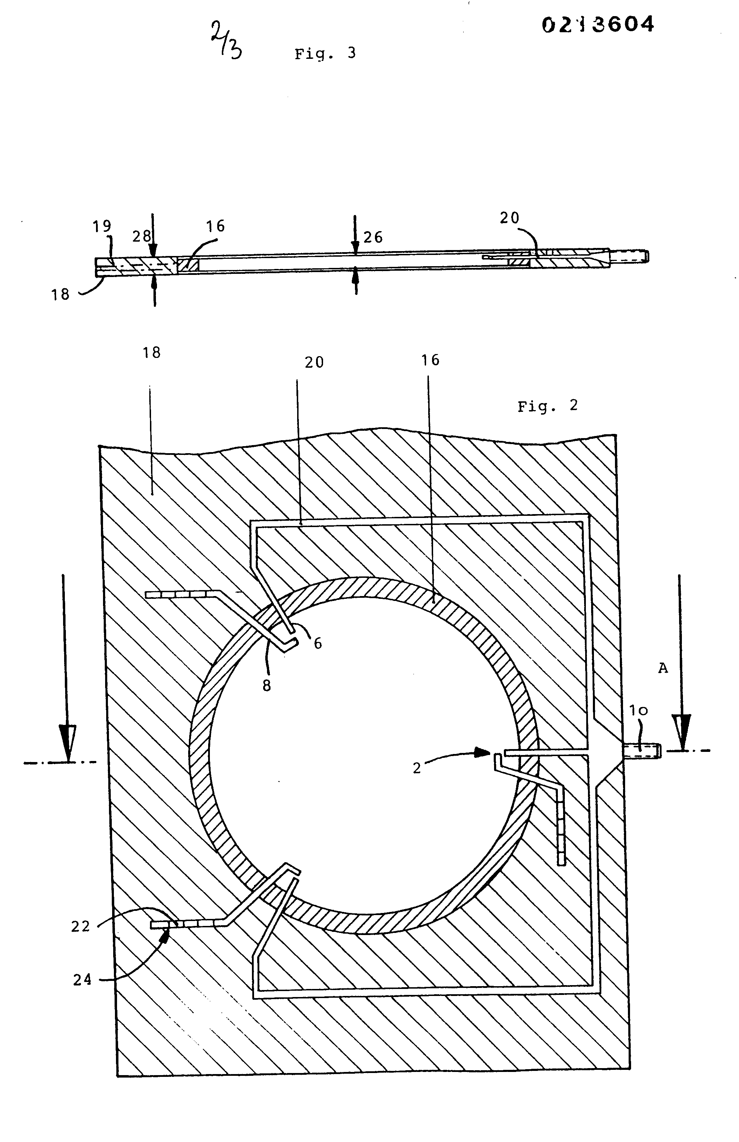

In dem Schnitt gemäß Fig. 2 ist radial innen liegend eine ringförmige Elektrodenhalterung 16 zu sehen, in welcher die einzelnen Elektroden 6, 8 zuverlässig verankert und befestigt sind. Radial außen liegend ist die Elektrodenhalterung 16 von einer Isolationsplatte 18 umgeben, die im Rahmen der Erfindung gleichzeitig die Zylinderkopfdichtung bildet und die nachfolgend auch als Elektrodenbett bezeichnet wird. Das Elektrodenbett besteht aus einem Material von hoher Temperaturbeständigkeit und einer hohen Dielektrizität und ist ferner flexibel ausgebildet. Innerhalb des Elektrodenbettes oder der Isolationsplatte 18 befinden sich elektrische Leiter 20, die gemeinsam auf den oben bereits erwähnten Stecker 10 geführt sind und die Verbindung der einzelnen Elektroden 6 des jeweiligen Elektrodenpaares 2 übernehmen. Die elektrischen Leiter 20 weisen senkrecht zur Zeichenebene, also in Richtung der Zylinderachse, eine geringere Stärke auf als das Elektrodenbett 18. Mittels der Halterung 16 werden auch die zweiten Elektroden 8 gehaltert, deren Leiterenden 22 im Elektrodenbett 18 enden und nicht nach außen geführt sind. Vielmehr weist das Elektrodenbett für die Enden 22 Durchbrechungen 24 auf, um somit eine direkte metallische Verbindung zum Motorblock bzw. zum Zylinderkopf zu erhalten. Im Rahmen der Erfindung sind die Enden 22 zweckmäßig im Bereich der Durchbrechungen 24 gewellt ausgebildet, bzw. sie weisen aufgrund ihrer Formgebung eine gewisse Nachgiebigkeit senkrecht zur Zeichenebene bzw. in Richtung der Zylinderachse auf.

Fig. 3 zeigt einen Schnitt durch die Zündanordnung entlang Schnittlinie A gemäß Fig. 2. Die Elektrodenhalterung 16 weist in axialer Richtung eine Materialstärke 26 auf, die kleiner ist als die Materialstärke 28 des Elektrodenbettes 18. Damit ist gewährleistet, daß beim Festschrauben des Zylinderkopfes die Elektrodenhalterung 16 nicht beschädigt wird. Aufgrund der größeren Materialstärke 28 kann demgegenüber beim Einspannen zwischen Zylinderkopf und Motorblock die Stärke vom Elektrodenbett 18 verringert werden. Die elektrischen Leiter 20 befinden sich im Inneren des Elektrodenbettes 18 und weisen eine wesentlich geringere Materialstärke als dieses auf. Damit ist eine zuverlässige Isolation bezüglich des Motorblocks gewährleistet. Maßgebend ist im Rahmen dieser Erfindung, daß die einander gegenüberliegenden Oberflächen von Zylinderkopf und Motorblock in Verbindung mit den Elektroden bzw. elektrischen Leiterbahnen als Kondensatorflächen wirksam sind. Die Isolationsplatte weist erfindungsgemäß eine hohe Dielektrizitätskonstante auf und aufgrund der geringen Materialdicke der Isolationsplatte wird in überraschend einfacher Weise eine hohe Kapazität der derart ausgebildeten Kondensatoren erzielt.

Wie durch die strichpunktierten Linien in Fig. 3 angedeutet, besteht die Isolationsplatte 18 aus drei dünnen Schichten. Die mittlere Schicht enthält entsprechend Fig. 2 im Rahmen dieser Erfindung durch die gesamte Schichtstärke hindurchgehende Aussparungen, in welche die Elektroden 6, 8 sowie deren Leiter 20 eingelegt sind. Die beiden anderen Schichten weisen hingegen keine entsprechenden Ausnehmungen auf und isolieren folglich gegenüber dem Motorblock bzw. dem Zylinderkopf. Es sei festgehalten, daß im Rahmen dieser Erfindung die Elektroden einschließlich Leiter, auch in eine einzige durchgehende Schicht aus einem geeigneten Isolations- und Dichtwerkstoff eingebettet sein kann, wobei ggfs. die Elektrodenhalterung integraler Bestandteil des Elektrodenbettes sein kann. Als besonders geeignet hat sich der erläuterte Schichtaufbau erwiesen, der eine einfache und kostengünstige Fertigung ermöglicht. Wesentlich ist für alle Ausführungsformen, daß die Elektrodenpaare unmittelbar an der Zylinderwand angeordnet sind, wobei der Innendurchmesser der Elektrodenhalterung 16 erfindungsgemäß im wesentlichen gleich groß ist wie der Zylinderdurchmesser. Entfällt die Elektrodenhalterung oder ist diese integraler Bestandteil der Isolationsplatte, so ist entsprechend der Innendurchmesser der Isolationsplatte erfindungsgemäß im wesentlichen gleich groß wie der Zylinderdurchmesser.

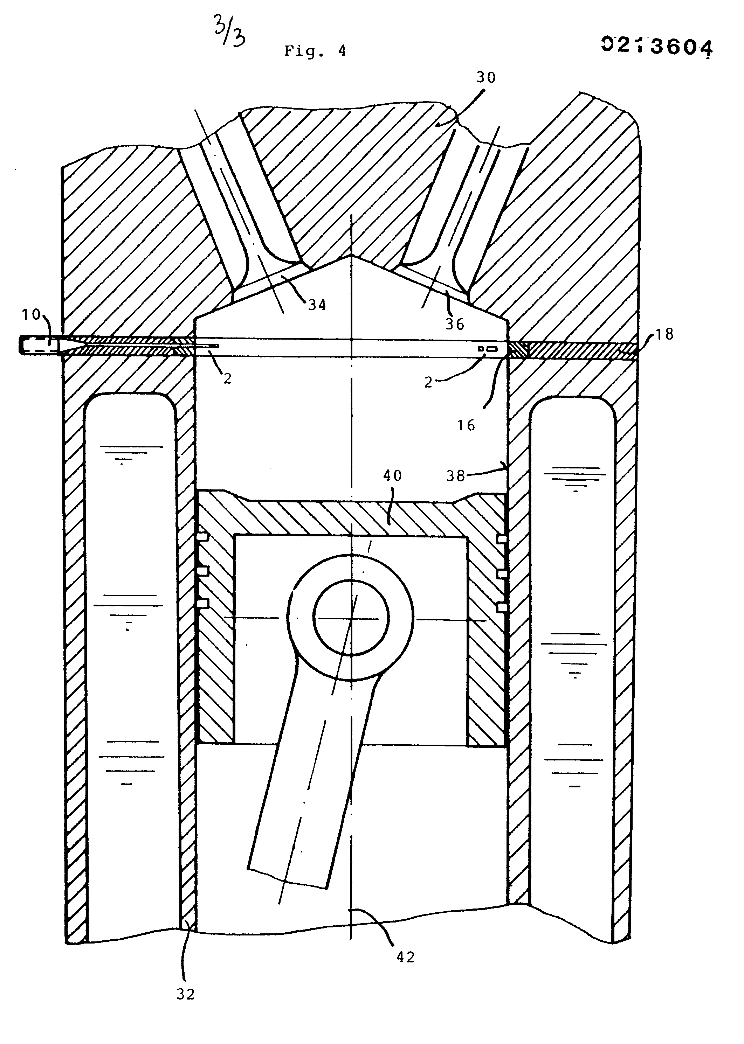

An Hand von Fig. 4 ist die zwischen Zylinderkopf 30 und Zylinderblock 32 eingebaute Zündvorrichtung dargestellt. Es ist ersichtlich, daß aufgrund der Zündvorrichtung die Geometrie des Zylinderkopfes, die Anordnung der Ventile und insgesamt die Gestaltung des Verbrennungsraumes praktisch nicht beeinträch-

Patentanwalt Dipl.-Phys. HANS KLOSE

Zugelassener Vertreter vor dem Europäischen Patentamt   — 10 —

10.

**0213604**

6700 Ludwigshafen

Kurfürstenstraße 32

tigt werden. Dies ist sehr wesentlich, da nunmehr bei der Gestaltung des Brennraumes nicht mehr auf eine Zündkerze Rücksicht genommen werden muß, wodurch eine weitere nicht unwesentliche Verbesserung des Verbrennungsvorganges gewährleistet wird. Es sind hier zwei Elektrodenpaare 2 zu erkennen, die im Bereich der zylindrischen Seitenwand 38 des Verbrennungsraumes liegen. Durch die Anordnung der Elektrodenpaare 2 in der Nähe der Seitenwand wird beim Zünden des Zündgemisches die Druckwelle den Zylinderkopf 30 nicht in Richtung der Zylinderachse 42, sondern von der Seite weitgehend tangential erreichen; es sei angemerkt, daß beim Zünden der Kolben 40 eine noch weiter nach oben verschobene Position einnimmt. Die Klopfgefahr wird erheblich reduziert. Die Verbrennung erfolgt von der Seite bzw. der Seitenwand 38 her radial nach innen in Richtung auf die Zylinderachse 42.

**Patentanwalt Dipl.-Phys. HANS KLOSE**
Zugelassener Vertreter vor dem Europäischen Patentamt   — 11 —   II

**0213604**
**6700 Ludwigshafen**
Kurfürstenstraße 32

## Bezugszeichenliste

| | |
|---|---|
| 2 | Elektrodenpaar |
| 4 | Zylinder |
| 6 | erste Elektrode |
| 8 | zweite Elektrode |
| 10 | Stecker |
| 12 | Leitung |
| 14 | Zündverteiler |
| 15 | Linie |
| 16 | Elektrodenhalterung |
| 18 | Isolationsplatte |
| 19 | gestrichelte Linie |
| 20 | elektrischer Leiter |
| 22 | Ende |
| 24 | Durchbrechung |
| 26, 28 | Materialstärke |
| 30 | Zylinderkopf |
| 32 | Zylinderblock |
| 34, 36 | Ventil |
| 38 | Seitenwand |
| 40 | Kolben |
| 42 | Zylinderachse |

Patentanwalt Dipl.-Phys. HANS KLOSE
Zugelassener Vertreter vor dem Europäischen Patentamt     - 12 -

**0213604**

6700 Ludwigshafen
Kürfürstenstraße 32

## Patentansprüche

1. Zündvorrichtung für einen Verbrennungsmotor mit einer zwischen Zylinderblock (32) und Zylinderkopf (30) angeordneten plattenförmigen Einlage, welche eine Isolationsplatte (18) und für jeden Zylinder eine Anzahl von Elektroden aufweist, wobei erste Elektroden (6) mit einem Zündverteiler einer Zündelektronik oder dergleichen verbunden und zweite Elektroden (8), insbesondere über den Zylinderblock (32), Bestandteil des Zündstromkreises sind,
dadurch gekennzeichnet, daß pro Zylinder wenigstens zwei Paare (2) mit je einer der ersten Elektroden (6) sowie einer der zweiten Elektroden (8) in der Nähe der Seitenwand (38) des Zylinders (4) angeordnet sind,
daß die ersten Elektroden (6) der Elektrodenpaare (2) parallel geschaltet sind,
daß die Isolationsplatte (18) als Dichtung zwischen Zylinderkopf (30) und Zylinderblock (32) ausgebildet ist
und daß die Dichtungs- und Isolationsplatte (18) aus einem Material hoher Dielektrizität besteht.

2. Zündvorrichtung insbesondere nach Anspruch 1, dadurch gekennzeichnet, daß die Elektrodenpaare (2) an der zylindrischen Seitenwand (38) einander diametral gegenüberliegen und/oder gleichmäßig über den Umfang des Brennraumes verteilt sind, wobei bevorzugt drei Elektrodenpaare (2) vorgesehen sind.

3. Zündvorrichtung nach Anspruch 1 oder 2, dadurch gekennzeichnet, daß die Elektrodenpaare (2) in einer bevorzugt ringförmigen Elektrodenhalterung (16) angeordnet sind, der insbesondere integraler Bestandteil der Isolationsplatte (18) ist.

4. Zündvorrichtung nach einem der vorhergehenden Ansprüche, dadurch gekennzeichnet, daß die einander gegenüberstehenden Oberflächen vom Zylinderkopf (30) und Zylinderblock (32),

**Patentanwalt Dipl.-Phys. HANS KLOSE**
Zugelassener Vertreter vor dem Europäischen Patentamt    - 13 -

**0213604**
**6700 Ludwigshafen**
Kurfürstenstraße 32

zwischen welchen die Isolationsplatte (18) angeordnet ist, und ferner die in der Isolationsplatte (18) angeordneten ersten Elektroden (6) und/oder deren Verbindungsleitungen (20) Kondensatoren bilden.

5. Zündvorrichtung nach einem der vorhergehenden Ansprüche, dadurch gekennzeichnet, daß die Isolationsplatte (18) aus wenigstens drei Schichten aufgebaut ist, wobei die mittlere Schicht Ausnehmungen für die Elektroden (6, 8) sowie deren Leitungen (20, 22) aufweist.

6. Zündvorrichtung nach einem der vorhergehenden Ansprüche, dadurch gekennzeichnet, daß die Materialstärke (28) der Isolationsplatte (18) größer ist als die Materialstärke (26) der Elektrodenhalterung (16).

7. Zündvorrichtung insbesondere nach einem der vorhergehenden Ansprüche, dadurch gekennzeichnet, daß die ersten Elektroden (6) über elektrische Leiter (20) miteinander verbunden und bevorzugt auf einen Stecker (10) geführt sind.

8. Zündvorrichtung nach einem der vorhergehenden Ansprüche, dadurch gekennzeichnet, daß die Isolationsplatte (18) Durchbrechungen (24), insbesondere in einer der beiden äußeren Schichten, für die Enden (22) der zweiten Elektroden (8) aufweist, wobei die Enden (22) in axialer Richtung elastisch nachgiebig ausgebildet sind.

9. Zündvorrichtung nach einem der vorhergehenden Ansprüche, dadurch gekennzeichnet, daß die Isolationsplatte (18) aus einem Material hoher Temperaturbeständigkeit und einer hohen Dielektrizität besteht und insbesondere aus synthetischem Glimmer (Mikanit FLM) oder einem vergleichbaren Werkstoff besteht.

10. Zündvorrichtung nach einem der vorhergehenden Ansprüche, dadurch gekennzeichnet, daß die Isolationsplatte (18) aus einem elastisch nachgiebigen und/oder flexiblen Werkstoff besteht.

Fig. 1

Fig. 3

Fig. 2